Europäisches Patentamt

**European Patent Office**

**Office européen des brevets**

(11) Veröffentlichungsnummer: **0 132 638**
**B1**

(12) **EUROPÄISCHE PATENTSCHRIFT**

(45) Veröffentlichungstag der Patentschrift:
04.02.87

(51) Int. Cl.⁴: **F 01 D 5/14, F 04 D 29/68**

(21) Anmeldenummer: **84107733.2**

(22) Anmeldetag: **04.07.84**

(54) Axial durchströmtes Schaufelgitter einer mit Gas oder Dampf betriebenen Turbine.

(30) Priorität: **15.07.83 DE 3325663**

(43) Veröffentlichungstag der Anmeldung:
**13.02.85 Patentblatt 85/7**

(45) Bekanntmachung des Hinweises auf die Patenterteilung:
**04.02.87 Patentblatt 87/6**

(84) Benannte Vertragsstaaten:
**AT CH DE FR GB IT LI SE**

(56) Entgegenhaltungen:
**CH-A-205 625
DE-A-3 043 567
FR-A-1 570 380
GB-A-750 305
GB-A-2 032 048
US-A-3 014 640**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Eckardt, Dietrich, Dr.- Ing., Irschenriederstrasse 13a, D-8000 Mümchen 60 (DE)**
Erfinder: **Schäffler, Arthur, Dipl.- Ing. grad., Ganghofer- Strasse 11, D-8061 Vierkirchen (DE)**

EP 0 132 638 B1

LIBER, STOCKHOLM 1987

## Beschreibung

Die Erfindung bezieht sich auf ein axial durchströmtes Schaufelgitter einer mit Gas oder Dampf betriebenen Turbine, dessen Schaufelprofile so ausgebildet sind, daß die Strömung entlang des größten Teils der saugseitigen Profiloberfläche, bis zu einem Geschwindigkeitsmaximum im Bereich der Kanalengfläche beschleunigt und stromab davon bis zur Profilhinterkante verzögert wird, mit einer stromabwärts des Geschwindigkeitsmaximums auf der Saugseite (Profilseite) der Schaufel im Bereich der verzögerten Strömung im wesentlichen über die ganze Schaufelhöhe reichenden Störkante.

Ein Schaufelgitter dieser Gattung ist aus der GB-A 750 305 bekannt.

Abhängig vom Turbulenzgrad der Strömung, von der Größe des Druckgradienten in Strömungsrichtung und von der Reynoldszahl $Re_2$, einem Ähnlichkeitsparameter, gebildet aus der Profilsehnenlänge 1, der Abströmgeschwindigkeit $c_2$ und der kinematischen Viskosität $v_2$ am Austritt des Schaufelgitters, schlägt die Grenzschicht unmittelbar oder unter Ausbildung von Umschlag- oder Ablöseblasen in den turbulenten Zustand um.

In Niederdruckturbinen, beispielsweise den Endstufen axial durchströmter Fluggasturbinen, treten Reynoldszahlen zwischen 50 000 und 500 000 auf. Dieses Reynoldszahlniveau liegt im laminar/turbulenten Umschlagbereich, d. h. verzögerte laminare Grenzschichten ändern ihren Strömungszustand unter Ausbildung stark verlustbehafteter Umschlag- oder Ablöseblasen.

Bei dem Schaufelgitter nach der obengenannten GB-Patentschrift wird die Störkante durch eine, in Schaufellängsrichtung sich erstreckende Vertiefung, insbesondere eine Nut ausgebildet. Über die Tiefe dieser Vertiefung oder Nut bezüglich der Schaufeloberfläche werden in der vorgenannten Druckschrift keine Angaben gemacht. Es ist jedoch davon auszugehen, daß die durch die Vertiefung gebildete Störkante nur dann die erwünschte Wirkung des Umschlags der Grenzschichtströmung von laminar in turbulent zeitigen kann, wenn eine relativ große Vertiefung bezüglich der Schaufeloberflächen eingehalten wird. Dadurch ergibt sich, wie auch bei anderen im Stand der Technik bekannten Mitteln, zur Bewirkung des Umschlags von laminarer in turbulente Strömung eine nicht mehr vernachlässigbare Einwirkung auf die Hauptströmung. Sobald diese ein höheres Reynoldszahlniveau erreicht, d. h. einen Bereich, in dem Mittel für einen Umschlag der Strömung nicht mehr benötigt werden, ergeben sich dadurch unerwünschte Strömungsverluste.

Im technischen Bericht von Francis R. Hama, James D. Long und John C. Hegarty vom August 1956 mit dem Titel "On Transition from Laminar to Turbulent Flow", veröffentlicht durch Document Service Center, Dayton, Ohio, U.S.A., werden Wassertankversuche über den Umschlag von laminarer in turbulente Grenzschichtströmung an einer ebenen Platte beschrieben, und es wird dort vorgeschlagen, zur Herbeiführung des Umschlages von laminarer in turbulente Grenzschichtströmung einen gewellten Draht oder eine Reihe dünner dreieckiger Plättchen, die auf eine flache Platte aufgeklebt sind, zu verwenden. Hinweise auf aerodynamische Schaufelgitter finden sich in dieser Druckschrift nicht.

Aufgabe der vorliegenden Erfindung ist es, in axial durchströmten Schaufelgittern der eingangs genannten Art, insbesondere in solchen, in denen über einen großen Betriebsbereich aufgrund des Reynoldszahlniveaus laminare Strömung herrscht, einen schnellen Umschlag von laminarer in turbulente Grenzschichtströmung auf der Schaufelsaugseite zu bewirken, wobei jedoch nur solche Mittel zulässig sein sollen, die Auswirkungen auf die Hauptströmung durch Querschnittsänderungen des Kanals oder merkliche Profiländerungen der Schaufel vermeiden.

Erfindungsgemäß wird diese Aufgabe dadurch gelöst, daß die Störkante in einer Tangentialebene zur Profiloberfläche sägezahnartig profiliert ist und von einem auf der Profiloberfläche erhaben angeordneten Band oder von der freiliegenden Kante einer von der Profiloberfläche ausgebildeten in Strömungsrichtung vorspringenden Stufe gebildet wird, wobei die Höhe (k) der Störkante Werte in einem Bereich aufweist, der abhangig von der Impulsverlustdicke $\delta_2$ der saugseitigen Grenzschicht an einer Stelle unmittelbar stromaufwärts vor der Störkante und der für diese Stelle aus der Höhe (k), der Geschwindigkeit im Wandabstand (k) und der Viskosität des Fluids gebildeten Reynoldszahl $Re_k$ bestimmt wird, wobei für $50 < Re_k < 200$ gelten soll $1{,}5 \ k/\delta_2 < 3{,}5$

$$\delta_2 = \frac{1}{U^2} \cdot \int_0^\infty u \ (U-u) \ dy$$

y = Wandabstandskoordinate  
u = f(y) = Geschwindigkeitskomponente tangential zur Profiloberfläche  
U = Geschwindigkeit in der durch Reibung nicht gestörten Strömung

$$Re_k = \frac{u_k \cdot k}{v_k}$$

$v_k$ = kinematische Zähigkeit des Fluids an der Stelle k.

Mit dem erfindungsgemäß ausgebildeten Schaufelgitter wird die gestellte Aufgabe vollständig gelöst, wobei durch die Abstimmung der Positionierung der Störkante in Strömungsrichtung und ihrer sägezahnartigen Ausbildung mit minimaler (im Grenzfall 0) Höhe der Störkante über der Profiloberfläche die erwünschte Wirkung erzielt werden kann. Die besten Ergebnisse sind dabei zu erzielen, wenn die Störkante 0,01 l bis 0,1 l stromabwärts des Geschwindigkeitsmaximums an der Schaufelsaugseite positioniert ist, wobei l die Länge der Profilsehne bedeutet.

Die Störkante kann alternativ von einem auf der Profiloberfläche erhaben angeordneten Band gebildet sein, oder sie kann die freiliegende Kante einer von der Profiloberfläche ausgebildeten in Strömungsrichtung vorspringenden Stufe sein.

Die erfindungsgemäß vorgegebenen Stufenhöhen der Störkante sind dabei so gering, daß auch bei höheren Reynoldszahlen, bei denen sie als Auslöser für den Umschlag von laminarer in turbulente Strömung nicht mehr benötigt werden, praktisch nicht mehr meßbare Verluste in Kauf zu nehmen sind.

Dieser Vorteil eines hochwirksamen Turbulenzerzeugers mit besonders geringem Strömungswiderstand wird auch bei den Ausführungsformen nach Patentanspruch 2 erzielt, wobei in diesen Fällen allerdings eine etwas größere Höhe der Stufe vorzusehen ist, um das Entstehen von Ablöseblasen zu verhindern.

Vorzugsweise sind die Störkanten in allen Fällen scharfkantig auszubilden. Das Sägezahnprofil der Störkante kann am Zahnkopf und Zahngrund spitz oder abgerundet ausgebildet sein. Besonders vorteilhaft im Sinne der Aufgabenstellung ist es jedoch, wenn abwechselnd Zahnkopf und Zahngrund abgerundet und spitz ausgebildet sind. Es hat sich gezeigt, daß durch diese Kombination bei minimaler Höhe der Störkante der effektivste Grenzschichtumschlag erzielbar ist. Die geometrische Ausbildung des Sägezahnprofils ist vorzugsweise durch Öffnungswinkel $\alpha$ von 45° bis 120° und eine Teilung von 5 % bis 15 % der Profilsehnenlänge bestimmt. Insoweit ein Störband zur Ausbildung der Störkante verwendet ist, soll dessen Breite b normal zur Störkante gemessen 0,05 bis 0,1 l betragen. Soweit die Störkante durch eine Senke in der Profiloberfläche gebildet wird, soll diese Senke mit einem Neigungswinkel $\beta$ von 3° bis 6° gegen die Schaufeloberfläche verlaufen.

Die Herstellung einer Schaufel für ein erfindungsgemäßes Schaufelgitter erfolgt vorzugsweise dadurch, daß in einem ersten Verfahrensschritt das mit Sägezahnprofil versehene Band vorzugsweise durch Drahterodieren aus einer Blechplatte ausgeschnitten wird und in einem zweiten Verfahrensschritt auf die Schaufeloberfläche vorzugsweise durch Schweißen aufgebracht wird.

Da sich die erfindungsgemäße Gestaltung eines Schaufelgitters ohne jede Schwierigkeit auch bei stark verwundenen Schaufeln anwenden läßt, können bereits benutzte Schaufeln in erfindungsgemäßer Weise nachgerüstet werden, wozu vorzugsweise die in den Ansprüchen 10 bis 12 aufgezeigten Verfahren zur Anwendung kommen.

Unter Bezugnahme auf die Zeichnung werden Ausführungsbeispiele der Erfindung erläutert; in der Zeichnung zeigen:

Fig. 1 einen Ausschnitt aus einem Querschnitt des Axialschaufelgitters einer Niederdruckturbine mit dem Verlauf der Oberflächenmachzahl und des Grenzschichtzustandes schematisch,

Fig. 2 einen Meridianschnitt durch zwei Stufen einer Niederdruckturbine deren Schaufeln mit erfindungsgemäßen Störkanten versehen sind,

Fig. 3 einen Querschnitt durch eine mit einem Band versehene Laufschaufel entsprechend der Linie III-III in Fig. 2 ausschnittweise vergrößert,

Fig. 4a, b, jeweils eine Draufsicht entsprechend Pfeilrichtung IV auf die Schaufel nach Fig. 3, in zwei unterschiedlichen Sägezahnprofilen,

Fig. 5 einen Querschnitt durch eine mit einer vorspringenden Stufe ausgebildeten Schaufel analog zu Fig. 3,

Fig. 6 eine Draufsicht auf die Schaufel entsprechend Pfeilrichtung VI in Fig. 5 und

Fig. 7 ein Schrägbild der in Fig. 5 im Querschnitt gezeigten Schaufel,

Fig. 8 einen Querschnitt entsprechend Fig. 5 einer mit zurückspringender Stufe ausgebildeten Schaufel,

Fig. 9 eine Draufsicht entsprechend Pfeilrichtung IX auf die Schaufel nach Fig. 8,

Fig. 10 einen Querschnitt entsprechend der Linie III-III in Fig. 2 durch eine Laufschaufel, bei der die Störkante durch eine in die Profiloberfläche eingesenkte Stufe gebildet wird,

Fig. 11 eine Draufsicht auf die Schaufel nach Fig. 10 in Pfeilrichtung XI,

Fig. 12 einen Querschnitt entsprechend Fig. 9 einer zweiten Ausführungsform einer Schaufel mit eingesenkter Stufe.

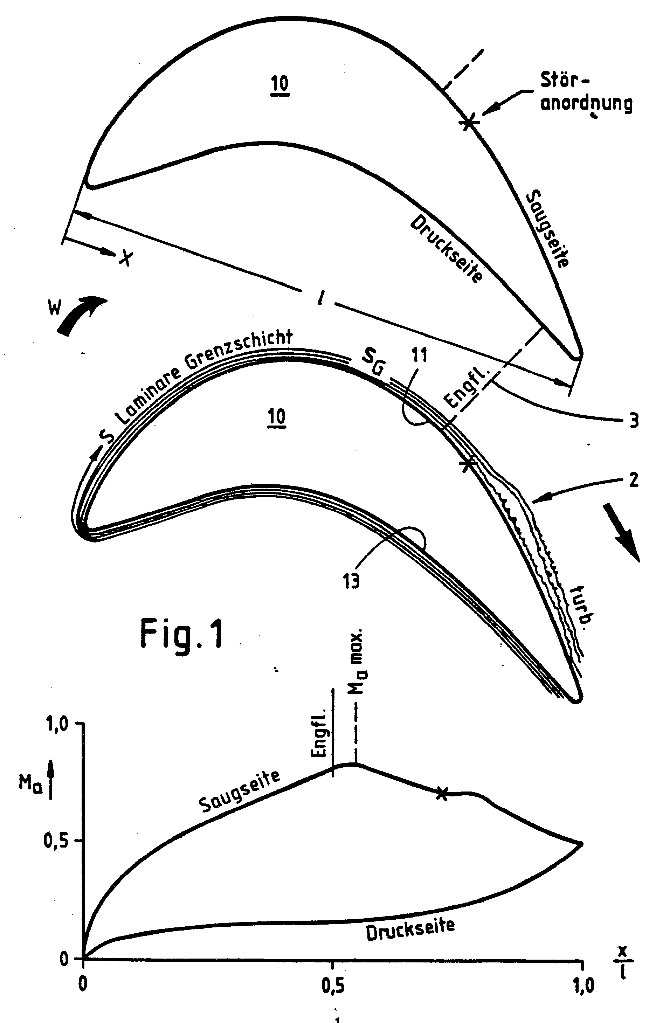

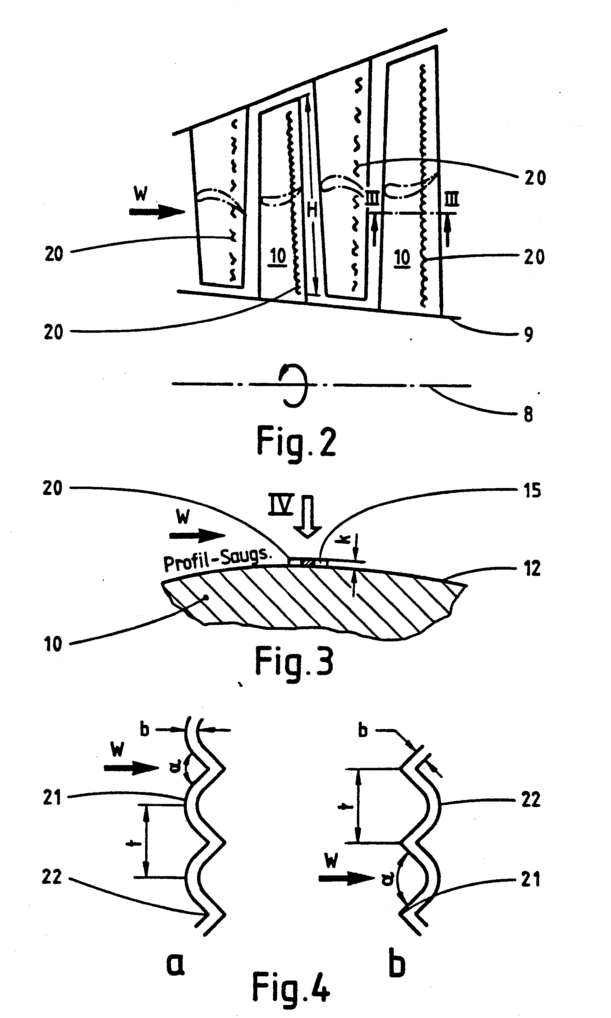

In dem in Fig. 1 dargestellten Schaufelgitter sind zwei benachbarte Axialschaufeln mit 10 bezeichnet. Für die obere Schaufel 10 ist die Profilsehne 1 sowie die in Richtung der Profilsehne 1 verlaufende Koordinate x eingezeichnet. Zu- und Abströmung zum Schaufelgitter sind mit Pfeilen angegeben. Für die untere Schaufel 10 ist der Grenzschichtverlauf schematisch angedeutet. Daraus ergibt sich, daß auf der Druckseite 13 der Schaufel 10 über deren gesamter Länge sich eine laminare Grenzschicht ausbildet, während auf der Saugseite 11 der Schaufel 10 die laminare Grenzschicht nur bis etwa zum Geschwindigkeitsmaximum ($Ma_{max}$) im Bereich der Engfläche 3 des von den beiden Schaufeln gebildeten Strömungskanals verläuft und sich stromabwärts der Engfläche 3 in dem mit Pfeil gekennzeichneten Bereich 2 laminare Ablöseblasen ausbilden, in deren Bereich die Grenzschicht turbulent wird. Im unteren Teil der Fig. 1 ist über der dimensionslos aufgetragenen Profillänge x : 1 die Machzahl entlang der Oberfläche der Schaufel 10 aufgetragen. Das Geschwindigkeitsmaximum liegt etwa im Bereich der Engfläche, d. h. bei etwa x : 1 = 0,55. Um nun die Ausbildung großer verlustbehafteter Ablöseblasen zu vermeiden, sind, wie in Fig. 2 angedeutet, auf der Profiloberseite (Saugseite) der Schaufeln durchgehende, im wesentlichen über die ganze Profiltiefe reichende sägezahnartig gezackte Störkanten 20 angeordnet.

Sowohl die Leitschaufeln als auch die Laufschaufeln eines um die Achse 8 rotierenden Turbinenläufers 9 sind mit Störkanten versehen. Die in der Zeichenebene nicht sichtbaren Störkanten der Leitschaufeln sind unterbrochen gezeichnet. Die Strömungsrichtung durch das Gitter ist in sämtlichen Figuren mit einem Pfeil w angegeben.

Es hat sich gezeigt, daß die geringsten Profilverluste dann erreicht werden, wenn die Störkanten 0,01 bis 0,1 l (l = Länge der Profilsehne der Schaufel) stromabwärts des Geschwindigkeitsmaximums auf der Saugseite der Schaufel positioniert sind.

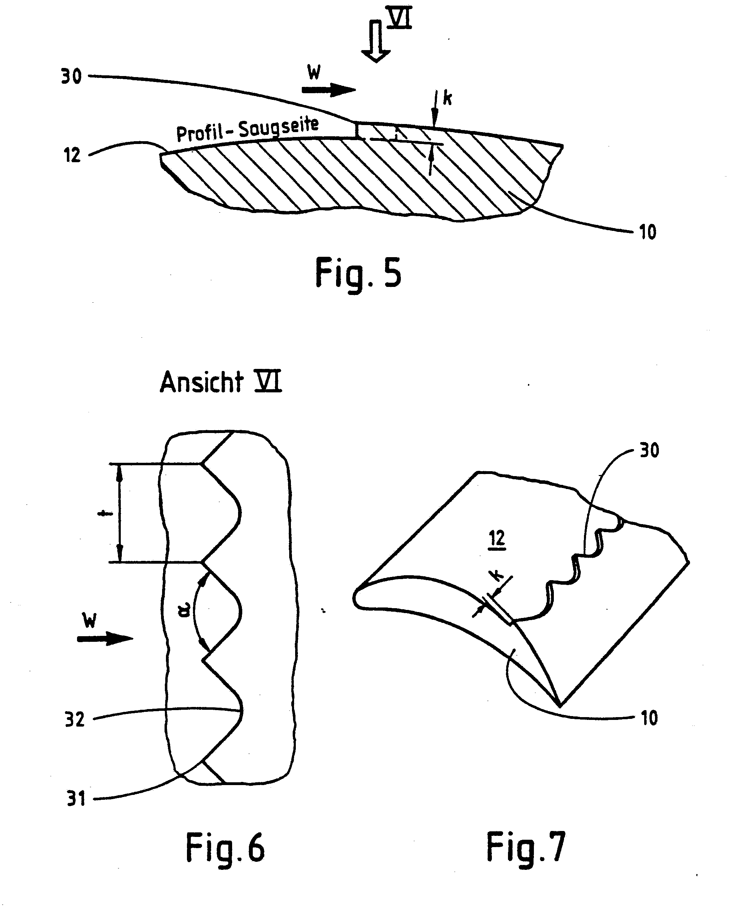

Wie sich aus dem in Fig. 3 dargestellten Teilquerschnitt einer Laufschaufel 10 ergibt, wird die Störkante bei dieser ersten Ausführungsform der Erfindung durch ein auf der Profiloberfläche der Schaufel befestigtes Band 15 gebildet. Das Band 15 kann aus einer ebenen Blechplatte ausgeschnitten sein und durch Schweißen auf der Profiloberfläche der Schaufel befestigt sein. Die Höhe des Bandes 15 und damit die Höhe der Störkante 20 über der Profiloberfläche 12 ist mit k bezeichnet. Die übrige geometrische Ausbildung des Bandes 15 ist in zwei alternativen Ausführungsformen in Fig. 4a und Fig. 4b dargestellt. Die beiden Ausführungsformen nach Fig. 4a und Fig. 4b unterscheiden sich dadurch, daß bei der Ausführung nach Fig. 4a jeweils der (stromauf liegende) Zahnkopf 21 des Sägezahnprofils abgerundet und der Zahngrund 22 spitz ausgebildet ist, wogegen bei der Ausführungsform nach Fig. 4b der Zahnkopf 21 einen spitzen Scheitel ausbildet und der Zahngrund 22 abgerundet ist. Die Teilung t des Sägezahnprofils soll 0,05 bis 0,15 l betragen. Der Öffnungswinkel α des Sägezahnprofils liegt beim gezeigten Ausführungsbeispiel bei 90°. Die Breite b des Bandes soll etwa 0,01 bis 0,03 l sein. Die Störkante 20, d. h. die der ankommenden Strömung w entgegengerichtete obere Kante des Bandes 15 soll scharfkantig ausgebildet sein. Dies gilt auch für die in den Fig. 5, 8, 10 und 12 dargestellten Ausführungsformen von Störkanten. Anstelle der in Fig. 4a und Fig. 4b gezeigten abwechselnd am Zahnkopf und am Zahngrund abgerundeten Störkanten sind auch Ausführungsformen möglich, die sowohl am Zahnkopf als auch am Zahngrund abgerundet sind oder an beiden Stellen spitz zulaufen.

Für eine entsprechend den Fig. 2 bis 4 gestaltete Niederdruckturbinenschaufel eines Gasturbinenstrahltriebwerks mit einer Profilsehnenlänge (l = 35 mm) ergab sich bei einer Flugmachzahl Ma = 0,8 in 10,7 km Höhe, d. h. bei einer Reynoldszahl $Re_2 \approx 100\,000$ erfindungsgemäß eine Höhe k von 0,06 bis 0,12 mm. Vergleichsversuche ergaben, daß sich bei einem entsprechend ausgerüsteten Strahltriebwerk der Treibstoffverbrauch im Reiseflug, der bekanntlich den längsten Teil einer Flugmission für Verkehrsflugzeuge ausmacht, um ca. 1 % senken läßt.

In den Fig. 5 bis 7 ist eine zweite grundlegende Störkantenausbildung offenbart. Wie der Teilquerschnitt durch eine Schaufel gemäß Fig. 5 zeigt, ist bei dieser Ausführungsform die Störkante 30 die freiliegende Kante einer von der Profiloberfläche 12 ausgebildeten in Strömungsrichtung vorspringenden Stufe. Eine solche Ausbildung der Störkante ist nur für die Neufertigung einer Schaufel geeignet. Wie sich aus der Draufsicht gemäß Fig. 6 und aus dem Schrägbild einer entsprechend ausgebildeten Schaufel gemäß Fig. 7 ergibt, sind die Köpfe des Sägezahnprofils jeweils spitz ausgebildet, während der Grundbereich abgerundet ist. Die Teilung t und der Öffnungswinkel α liegen in derselben Größenordnung wie im Zusammenhang mit der Ausführungsform nach den Fig. 3 und 4 beschrieben.

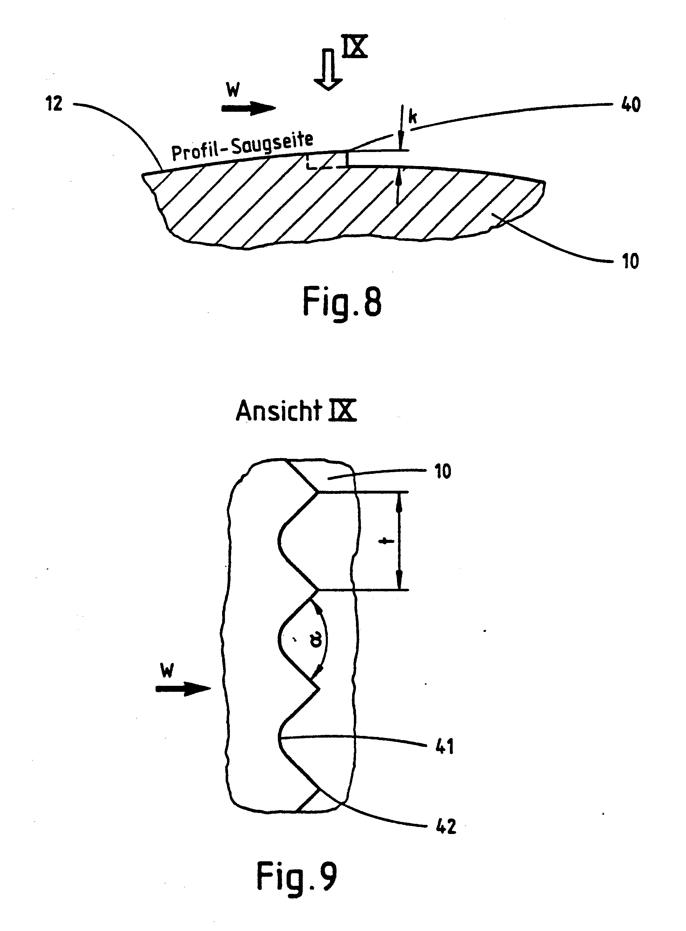

In den Fig. 8 und 9 ist eine Alternative zu der Ausführungsform nach den Fig. 5 bis 7 gezeigt, bei der ebenfalls eine gestufte Profiloberfläche 12 vorgesehen ist, im Unterschied zu der Ausbildung nach den Fig. 5 bis 7 jedoch die Störkante 40 die freiliegende Kante einer in Strömungsrichtung (w) zurückspringenden Stufe ist.

Auch bei der Ausführungsform nach den Fig. 8 und 9 ist der Zahngrund 41 des Sägezahnprofils abgerundet, während der Zahnkopf 42 einen spitzen Scheitel ausbildet.

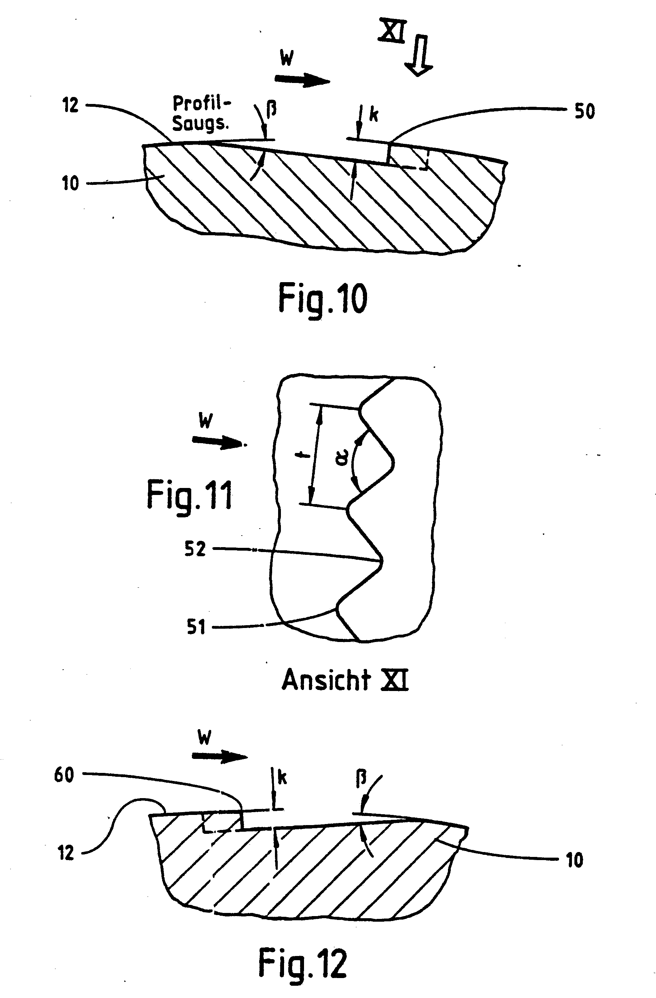

Eine weitere grundlegende Störkantenausbildung ist in den Fig. 10 bis 12 dargestellt. Bei dieser Ausführung entsteht die Störkante durch Einsenken einer Stufe in die Profiloberfläche 12 der Schaufel 10. Die Einsenkung erfolgt dabei konisch unter einem Neigungswinkel β der zwischen 3° und 6° gegen die Schaufeloberfläche 12 verläuft.

Der Übergang von der Schaufeloberfläche 12 zur Senke soll dabei stetig erfolgen. Alternativ kann die Störkante durch eine der Strömung entgegengerichtete Stufe gebildet sein (Störkante 50), wie es in Fig. 10 gezeigt ist oder es kann die Störkante bezogen auf die Strömungsrichtung w stromabwärts gerichtet sein (Störkante 60), wie es in Fig. 12 dargestellt ist. Die geometrische Ausbildung des Sägezahnprofils erfolgt in entsprechender Weise wie bei den Störkantenausbildungen in den Fig. 3 bis 9, wobei eine Ausführung mit gerundetem Zahnkopf und Zahngrund gemäß Fig. 11 bevorzugt ist.

**Patentansprüche**

1. Axial durchströmtes Schaufelgitter einer mit Gas oder Dampf betriebenen Turbine, dessen Schaufelprofile so ausgebildet sind, daß die Strömung entlang des größten Teils der saugseitigen Profiloberfläche (12), bis zu einem Geschwindigkeitsmaximum im Bereich der Kanalengfläche (3) beschleunigt und stromab davon bis zur Profilhinterkante verzögert wird, mit einer stromabwärts des Geschwindigkeitsmaximums auf der Saugseite (Profilseite) (11) der Schaufel (10) im Bereich der verzögerten Strömung im wesentlichen über die ganze Schaufelhöhe (H) reichenden Störkante (20, 30) dadurch gekennzeichnet, daß die Störkante (20, 30) in einer Tangentialebene zur Profiloberfläche (12) sägezahnartig profiliert ist und von einem auf der Profiloberfläche (12) erhaben angeordneten Band (15) oder von der freiliegenden Kante einer von der Profiloberfläche (12) ausgebildeten in Strömungsrichtung vorspringenden Stufe gebildet wird, wobei die Höhe (k) der Störkante Werte in einem Bereich aufweist, der abhängig von der Impulsverlustdicke $\delta_2$ der saugseitigen Grenzschicht an einer Stelle unmittelbar stromaufwärts vor der Störkante (20, 30) und der für diese Stelle aus der Höhe (k), der Geschwindigkeit im Wandabstand (k) und der Viskosität des Fluids gebildeten Reynoldszahl $Re_k$ bestimmt wird, wobei für $50 < Re_k < 200$ gelten soll $1{,}5 < k/\delta_2 < 3{,}5$

$$\delta_2 = \frac{1}{U^2} \cdot \int_0^{\overline{\phantom{\;\;}}} u\,(U-u)\,dy$$

y = Wandabstandskoordinate

u = f(y) = Geschwindigkeitskomponente tangential zur Profiloberfläche

U = Geschwindigkeit in der durch Reibung nicht gestörten Strömung

$$Re_k = \frac{u_k \cdot k}{\vartheta_k}$$

vk = kinematische Zähigkeit des Fluids an der Stelle k.

2. Axial durchströmtes Schaufelgitter einer mit Gas oder Dampf betriebenen Turbine, dessen Schaufelprofile so ausgebildet sind, daß die Strömung entlang des größten Teils der saugseitigen Profiloberfläche (12), bis zum zu einem Geschwindigkeitsmaximum im Bereich der Kanalengfläche (3) beschleunigt und stromab davon bis zur Profilhinterkante verzögert wird ist einer stromabwärts des Geschwindigkeitsmaximums auf der Saugseite (Profiloberseite) (11) der Schaufel (10) im Bereich der verzögerten Strömung im wesentlichen über die ganze Schaufelhöhe (H) reichenden Störkante (40, 50, 60), dadurch gekennzeichnet, daß die Störkante (40, 50, 60) in einer Tangentialebene zur Profiloberfläche (12) sägezahnartig profiliert ist und die Störkante die freiliegende Kante (40) einer von der Profiloberfläche (12) ausgebildeten in Strömungsrichtung zurückspringenden Stufe ist oder durch eine in die Profiloberfläche (12) eingesenkte Stufe (50, 60) gebildet wird, wobei die Höhe (k) der Stufe in der Profiloberfläche Werte in einem Bereich aufweist, der abhängig von der Impulsverlustdicke $\delta_2$ der Grenzschicht an einer Stelle unmittelbar stromaufwärts vor der Störkante (40, 50, 60) und der für diese Stelle aus der Höhe (k) der Geschwindigkeit im Wandabstand (k) und der Viskosität des Fluids gebildeten Reynoldszahl $Re_k$ bestimmt wird, wobei für $200 < Re_k < 500$ gelten soll $2 < k/\delta_2 < 4{,}5$ (Definition der Funktionsgrößen wie Anspruch 1).

3. Schaufelgitter nach Anspruch 1 oder 2, dadurch gekennzeichnet, daß das Sägezahnprofil der Störkante (20, 30, 40, 50, 60) sowohl am Zahnkopf als auch am Zahngrund spitz ausgebildet ist.

4. Schaufelgitter nach Anspruch 1 oder 2, dadurch gekennzeichnet, daß das Sägezahnprofil der Störkante sowohl am Zahnkopf als auch am Zahngrund abgerundet ist.

5. Schaufelgitter nach Anspruch 1 oder 2, dadurch gekennzeichnet, daß das Sägezahnprofil der Störkante abwechselnd am Zahnkopf und am Zahngrund spitz und abgerundet ausgebildet ist.

6. Schaufelgitter nach den Ansprüchen 1 bis 5, dadurch gekennzeichnet, daß das Sägezahnprofil der Störkante (20, 30, 40, 50, 60) einen Öffnungswinkel α von 45° bis 120° und eine Teilung (t) von 5% bis 15% der Profilsehnenlänge (l) aufweist.

7. Schaufelgitter nach den Ansprüchen 1 und 3 bis 6, dadurch gekennzeichnet, daß die Breite b des Störbandes, normal zur Störkante gemessen, 0,05 bis 0,1 l beträgt.

8. Schaufelgitter nach den Ansprüchen 2 bis 6, dadurch gekennzeichnet, daß die die Störkante (50, 60) bildende Senke mit einem Neigungswinkel β von 3 bis 6° gegen die Schaufeloberfläche (12) verläuft.

9. Verfahren zur Herstellung einer Schaufel für ein Schaufelgitter nach den Ansprüchen 1 und 3 bis 7, dadurch gekennzeichnet, daß in einem ersten Verfahrensschritt das mit den Sägezahnprofil versehene Band aus einer Blechplatte ausgeschnitten wird und in einem zweiten Verfahrensschritt auf die Schaufeloberfläche aufgebracht wird.

10. Verfahren zur Herstellung einer Schaufel für ein Schaufelgitter nach Anspruch 9, dadurch gekennzeichnet, daß das Ausschneiden des Sägezahnprofils durch Drahterodieren erfolgt.

11. Verfahren zur Herstellung einer Schaufel für ein Schaufelgitter nach Anspruch 9 oder 10, dadurch gekennzeichnet, daß das Aufbringen des mit dem Sägezahnprofil versehenen Bandes auf der Schaufeloberfläche durch schweißen erfolgt.

12. Verfahren zur Herstellung einer Schaufel für ein Schaufelgitter nach den Ansprüchen 1 und 3 bis 7, dadurch gekennzeichnet, daß auf der Schaufel mit glatter Oberfläche das Band mittels des Maskenspritz- oder Aufdampfverfahrens aufgebracht wird.

13. Verfahren zur Herstellung einer Schaufel für ein Schaufelgitter nach den Ansprüchen 1 bis 7, dadurch gekennzeichnet, daß auf der Schaufel mit glatter Oberfläche das Band mittels einer Lötfolie aufgebracht wird.

14. Verfahren zur Herstellung einer Schaufel für ein Schaufelgitter nach den Ansprüchen 1 bis 6 und 8, dadurch gekennzeichnet, daß die Stufe durch Anwendung des elektro-chemischen oder funkenerosiven Senkens in die glatte Oberfläche der Schaufel eingebracht wird.

## Revendications

1.- Cascade d'aubes, à écoulement axial, d'une turbine à gaz ou à vapeur, et dont les profils d'aubes sont tels que l'écoulement le long de la majeure partie de la surface du profil côté aspiration (12) est accéléré jusqu'à un maximum de vitesse dans la zone de section étroite (3) du canal, tandis que cet écoulement est retardé en aval de cette section jusqu'au bord arrière du profil, avec une arête perturbatrice (20, 30) s'étendant en pratique sur la totalité de la hauteur (H) de l'aube en aval du maximum de vitesse sur le côté aspiration (côté profil) (11) de l'aube (10) dans la zone de l'écoulement retardé, cascade d'aubes caractérisée en ce que l'arête perturbatrice (20, 30) est profilée en dents de scie dans un plan tangentiel à la surface (12) du profil et est constituée par une bande (15) disposée en saillie sur la surface (12) du profil ou bien par l'arête libre d'un gradin formé à partir de la surface (12) du profil et faisant saillie vers l'avant dans la direction d'écoulement, tandis que la hauteur (k) de cette arête perturbatrice présente des valeurs dans une étendue qui est déterminée en fonction de l'épaisseur de pertes d'impulsions $\delta_2$ de la couche limite côté aspiration en un point se situant directement en amont devant l'arête perturbatrice (20, 30), et du nombre de Reynolds $Re_k$ formés pour ce point à partir de la hauteur (k), de la vitesse à la distance (k) de la paroi, et de la viscosité du fluide, de sorte que pour: $50 < Re_k < 200$, on a: $1,5 \ k/\delta_2 < 3,5$ avec:

$$\delta_2 = \frac{1}{U^2} \cdot \int_0^\infty u \ (U - u) \ dy$$

$y$ = coordonnée de distance à la paroi
$u = f(y)$ = composante de vitesse tangentielle à la surface du profil
$U$ = vitesse dans l'écoulement non perturbé par le frottement

$$Re_k = \frac{u_k \cdot k}{\nu k}$$

$\nu k$ = viscosité cinématique du fluide au point k.

2.- Cascade d'aubes à écoulement axial d'une turbine à gaz ou à vapeur dont les profils d'aubes sont tels que l'écoulement, le long de la majeure partie de la surface du profil (12) côté aspiration, est accéléré jusqu'à un maximum de vitesse dans la zone de la section étroite (3) du canal, et est retardé en aval de cette section jusqu'au bord arrière du profil, avec une arête perturbatrice (40, 50, 60) s'étendant en pratique sur la totalité de la hauteur (H) de l'aube en aval du maximum de vitesse sur le côté aspiration (côté supérieur du profil) (11) de l'aube (10) dans la zone de l'écoulement retardé, cascade d'aubes caractérisée en ce que l'arête perturbatrice (40, 50, 60) est profilée en dents de scie dans un plan tangentiel à la surface du profil (12), et que cette arête perturbatrice est l'arête libre (40) d'un gradin formé à partir de la surface (12) du profil et faisant saillie vers l'arrière dans la direction d'écoulement ou bien est constituée par un gradin (50, 60) enfoncé dans la surface (12) du profil, tandis que la hauteur (k) du gradin dans la surface du profilé présente des valeurs dans une étendue qui est déterminée en fonction de l'épaisseur de pertes d'impulsions $\delta_2$ de la couche limite en un point se situant directement en amont devant l'arête perturbatrice (40, 50, 60) et du nombre de Reynolds $Re_k$ formés pour ce point à partir de la hauteur (k), de la vitesse à la distance (k) de la paroi, et de la viscosité du fluide, de sorte que pour: $200 < Re_k < 500$ on a: $2 < k/\delta_2 < 4,5$ (définition des grandeurs fonctionnelles comme dans la revendication 1).

3.- Cascade d'aubes selon la revendication 1 ou 2, caractérisée en ce que le profil en dents de scie de l'arête perturbatrice (20, 30, 40, 50, 60) est à angle vif, aussi bien à la tête des dents qu'au fond des dents.

4.- Cascade d'aubes selon la revendication 1 ou 2, caractérisée en ce que le profil en dents de scie de l'arête perturbatrice est arrondi, aussi bien à la tête des dents qu'au fond des dents.

5.- Cascade d'aubes selon la revendication 1 ou 2, caractérisée en ce que le profil en dents de scie de l'arête perturbatrice est alternativement à angle vif et arrondi à la tête des dents et au fond des dents.

6.- Cascade d'aubes selon les revendications 1 à 5, caractérisée en ce que le profil en dents de scie de l'arête perturbatrice (20, 30, 40, 50, 60) a un angle d'ouverture $\alpha$ de 45° à 120° et un pas (t) de 5 % à 15 % de la longueur (1) de la corde du profil.

7.- Cascade d'aubes selon les revendications 1 et 3 à 6, caractérisée en ce que la largeur b de la bande perturbatrice, mesurée perpendiculairement à l'arête perturbatrice, est de 0,05 à 0,1 l.

8.- Cascade d'aubes selon les revendications 2 à 6, caractérisée en ce que la dépression constituant l'arête perturbatrice (50, 60) s'étend selon un angle d'inclinaison 4 de 3 à 6° par rapport à la surface (12) de l'aube.

9.- Procédé pour la réalisation d'une aube pour une cascade d'aubes selon les revendications 1 et 3 à 7, caractérisé en ce que, dans une première étape du procédé, la bande munie du profil en dents de scie est découpée à partir d'une plaque de tôle et est rapportée dans une seconde étape du procédé sur la surface de l'aube.

10.- Procédé pour la réalisation d'une aube pour une cascade d'aubes selon la revendication 9, caractérisé en ce que la découpe du profil en dents de scie s'effectue par érosion au fil.

11.- Procédé pour la réalisation d'une aube pour une cascade d'aubes selon la revendication 9 ou 10, caractérisé en ce que l'application de la bande munie du profil en dents de scie s'effectue sur la surface de l'aube par soudage.

12.- Procédé pour réaliser une aube pour une cascade d'aubes selon les revendications 1 et 3 à 7, caractérisé en ce que la bande est rapportée sur l'aube à surface lisse au moyen du procédé de projection sur masque ou bien du procédé de métallisation sous vide.

13.- Procédé pour la réalisation d'une aube pour une cascade d'aubes selon les revendications 1 à 7, caractérisé en ce que la bande est rapportée sur l'aube comportant une surface lisse au moyen d'une feuille de brasage.

14.- Procédé pour la réalisation d'une aube pour une cascade d'aubes selon les revendications 1 à 6 et 8, caractérisé en ce que le gradin dans la surface lisse de l'aube est obtenu en utilisant le fonçage électrochimique ou bien le fonçage par étincellage.

## Claims

1. Axial-flow blade row of a qas or steam driven turbine, of which the blade profiles are such that along the largest part of the suction-side profile surface (12) the flow is accelerated up to a velocity maximum in the region of passage narrowing (3) and is, downstream thereof, retarded as far as the trailing edge of the profile, having a spoiler edge (20, 30) downstream of the velocity maximum on the suction side (profile side) (11) of the blade (10), in the region of the retarded flow and extending substantially over the entire blade height (H), characterized in that the spoiler edge (20, 30) has, in a plane tangent to the profile surface (12) a sawtooth profile constituted by a raised strip (15) on the profile surface (12) or by the free edqe of a step projectinq into the direction of flow and from the profile surface (12), the height (k) of the spoiler edge being within a range which, independently of the impulse loss thickness $\delta_2$ of the suction-side boundary layer at a point immediately downstream and before the spoiler edge (20, 30) and reqardless of the Reynolds number $Re_k$ for this point, arrived at from the height (k), the velocity at wall gap (k) and the viscosity of the fluid, where $1.5 \, k/\delta_2 < 3.5$ is true for $50 < Re_k < 200$

$$\delta_2 = \frac{1}{U^2} \cdot \int_0^{\overrightarrow{u}} (U-u) \, dy$$

y = wall gap coordinates
u = f(y) = velocity component tangentially to the profile surface
U = velocity in the flow unaffected by friction

$$Re_k = \frac{u_k \cdot k}{\nu \, k}$$

ν k = kinematic viscosity of the fluid at point k

2. Axial-flow blade row of a qas or steam driven turbine, of which the blade profiles are such that along the largest part of the suction-side profile surface (12) the flow is accelerated up to a velocity maximum in the region of passage narrowing (3) and is, downstream thereof, retarded as far as the trailing edge of the profile, having a spoiler edge (40, 50, 60) downstream of the velocity maximum on the suction side (upper side of profile) (11) of the blade (10), in the region of the retarded flow and extending substantially over the entire blade height (H), characterized in that the spoiler edge (40, 50, 60) has, in a plane tangent to the profile surface (12), a sawtooth profile, the spoiler edge being the free edge (40) of a step projecting back into the direction of flow and constructed on the profile surface (12), or being formed by a step (50, 60) sunk into the profile surface (12), the height (k) of the step in the profile surface being within a range which, dependent upon the impulse loss thickness $\delta_2$ of the suction-side boundary layer at a point immediately upstream and before the spoiler edge (40, 50, 60) and regardless of the Reynolds number $Re_k$ for this point, arrived at from the height (k), the velocity at wall gap (k) and the viscosity of the fluid, where $2 < k/\delta_2 < 4.5$ (definitions of function variables, see Claim 1).

3. Blade row according to Claim 1 or 2, characterized in that the sawtooth profile of the spoiler edge (20, 30, 40, 50, 60) is pointed at both tooth tip and tooth root.

4. Blade row according to Claim 1 or 2, characterized in that the sawtooth profile of the spoiler edge is rounded off at both tooth tip and tooth root.

5. Blade row according to Claim 1 or 2, characterized in that the sawtooth profile of the spoiler edge is alternately pointed and rounded off at tooth tip and tooth root.

6. Blade row according to Claims 1 to 5, characterized in that the sawtooth profile of the spoiler edge (20, 30, 40, 50, 60) has an opening angle of 45° to 120° and a spacing (t) of 5% to 15% of the chord length (1).

7. Blade row according to Claims 1 and 3 to 6, characterized in that the width b of the spoiler strip, measured at a rightangle to the spoiler edge, is 0.05 to 0.1 l.

8. Blade row according to Claims 2 to 6, characterized in that the depression forming the spoiler edge (50, 60) extends towards the blade surface (12) at an angle of inclination of 3 to 16°.

9. A method of producing a blade for a blade row according to Claims 1 and 3 to 7, characterized in that in a first stage of the method the strip carrying the sawtooth profile is cut from a sheet metal plate and applied to the blade surface in a second stage of the method.

10. A method of producing a blade for a blade row according to Claim 9, characterized in that the sawtooth profile is cut out by wire erosion.

11. A method of producing a blade for a blade row according to Claim 9 or 10, characterized in that the strip carrying the sawtooth profile is applied to the blade surface by welding.

12. A method of producing a blade for a blade row according to Claims 1 and 3 to 7, characterized in that the strip is applied to the smooth-surfaced blade by the mask spraying or metallization process.

13. A method of producing a blade for a blade row according to Claims 1 to 7, characterized in that the strip is applied to the smooth-surfaced blade by means of a film of solder.

14. A method of producing a blade for a blade row according to Claims 1 to 6 and 8, characterized in that the step is incorporated into the smooth surface of the blade by the application of electro-chemical or electrical discharge machining.

Fig.1

**Fig. 2**

Profil-Saugs.

**Fig. 3**

a                    b

**Fig. 4**

Fig. 5

Ansicht Ⅵ

Fig. 6

Fig. 7

W

IX

12

40

**Profil-Saugseite**

k

10

## Fig.8

## Ansicht IX

10

W

α

41

42

## Fig.9

XI

W

12 — Profil-Saugs. β   k   — 50

10

**Fig.10**

W

**Fig.11**

t   α

52 —

51 —

Ansicht XI

W

60 —   k   β

12 —   — 10

**Fig.12**